# EUROPÄISCHE PATENTANMELDUNG

(11) **EP 3 281 522 A1**
(43) Veröffentlichungstag der Anmeldung: **14.02.2018**
(21) Anmeldenummer: 16020299.0
(22) Anmeldetag: 10.08.2016
(51) Int. Cl.: A01K 85/00, A01K 83/06

(54) **METALLKOPF MIT AUSTAUSCHBAREN HAKEN**

(71) Anmelder: Kendlbacher, Peter, 5303 Thalgau (AT); Bergthaler, Gerhard, 5301 Eugendorf (AT)
(72) Erfinder: Kendlbacher, Peter, 5303 Thalgau (AT); Bergthaler, Gerhard, 5301 Eugendorf (AT)

(57) **Zusammenfassung**

Zusammengefasst handelt es sich bei dem Patentanspruch um einen Metallkörper (1) mit obenliegenden Ösen (3) und einen speziell geformten Haken (9) der sich im Metallkörper (1) fixieren lässt.

Der Metallkörper (1) dient zur Aufnahme des Hakens, wobei sich verschiedene Köderformen (Kunstköder, Naturköder) über den Haken schieben lassen.

## Beschreibung

Derzeit auf dem Markt befindliche Metallköpfe sind fixverbundenen Metallköpfe (Jig-Köpfe)und haben den Nachteil, dass der aufgezogene Gummiköder durch dessen Auswechslung immer beschädigt wird. Weiters ist es nicht möglich Haken und Kopf zu trennen, vor allem wenn man Gewichte oder Hakengrößen verändern will. Beim Entfernen des Metallkopfes aus dem Fischmaul, ist es unmöglich mit der Lösezange den festsitzenden Haken vom (Natur-)GummiKöder ordnungsgemäß zu entfernen ohne den (Natur-)GummiKöder zu verletzen.

Durch die Trennung vom Metallkopf und Metallhaken kann man jederzeit einen anderen Metallhaken bzw. das Gewicht des Metallkopfes verändern. Ein weiterer Vorteil ist es, beim Entfernen des Hakens aus dem Fischmaul, da nur die Rändelschraube am Metallkopf gelockert wird und somit verbleibt der Metallkopf am Fischgerät und der Metallhaken am Fisch. Jetzt kann der Gummiköder oder Naturköder vom Haken gezogen werden und mittels Lösezange kann der Haken aus dem Fischmaul entfernt werden.

Durch das Öffnen der obenliegenden Rändelschraube ist es Jedermann möglich den Haken von dem Metallkopf zu trennen und wieder einzusetzen.

Durch die verschieden platzierten obenliegenden Ösen, ist es möglich den Köder in verschiedenen Tiefen zu präsentieren.
1.) Metallkopf
2.) Ausnehmung für Fischauge
3.) Ösen
4.) Ausnehmung für Rändelschraube
5.) Gewinde für Rändelschraube
6.) Ausnehmung für Hakenklemmung
7.) Logo
8.) Rändelschraube
9.) Fischhaken mit Sickung mit und ohne Wiederhaken

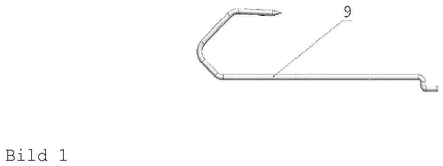

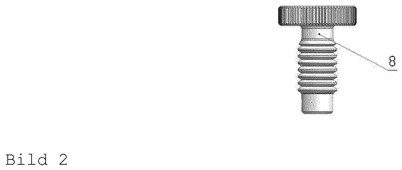

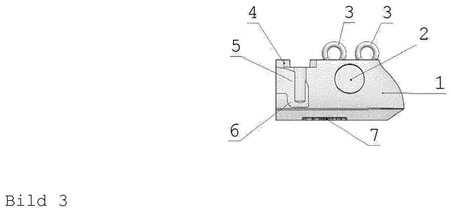

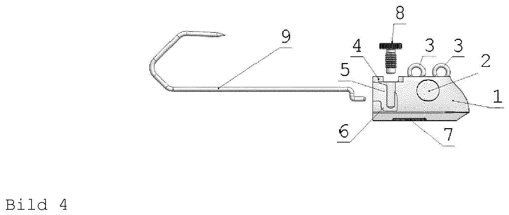

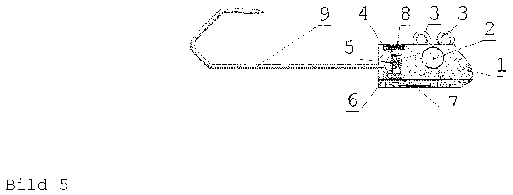

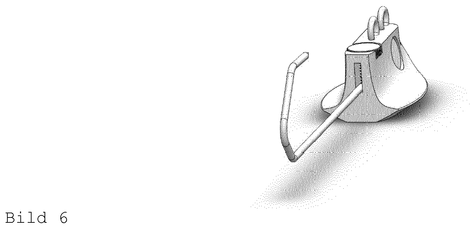

## Patentansprüche

1. Metallkörper mit obenliegenden Ösen und auf der Rückseite eine Öffnung zur Aufnahme und Fixierung eines Metallhakens,
**dadurch gekennzeichnet,**
**dass** eine Fixierung des Metallhakens mittels Rändelschraube am Metallkopf erfolgt.

2. Speziell gebogener Metallhaken für die Aufnahme am Metallkopf mittels Rändelschraube.

## Geänderte Patentansprüche

### Geänderte Patentansprüche gemäss Regel 137(2) EPÜ.

1. Ein Körper der auf der Rückseite eine Aussparung zur Drahtaufnahme und Fixierung hat. Diese Drahtaufnahme kann eine Runde/ Ovale/ Eckige/ Vieleckige usw. Form aufweisen. Dementsprechend ist die Form des Drahtes der Drahtaufnahme anzupassen,
diese ist **dadurch gekennzeichnet,**
**dass** eine Fixierung des Drahtgegenstandes mittels Drehverschluss am Körper erfolgt.

2. Speziell gebogener Drahtgegenstand für die Aufnahme am Körper mittels Drehverschluss mit Sicherung.
